# EUROPEAN PATENT APPLICATION

(11) **EP 2 660 562 A1**
(43) Date of publication of application: **06.11.2013**
(21) Application number: 12196289.8
(22) Date of filing: 10.12.2012
(51) Int. Cl.: G01C 21/36

(54) **Route Guidance Apparatus and Method with Voice Recognition**

(30) Priority: 03.05.2012 KR 20120046872
(71) Applicant: Hyundai Mnsoft, Inc., Seoul 140-711 (KR)
(72) Inventor: Choi, Jae-Young, 140-711 Seoul (KR)
(74) Representative: Viering, Jentschura & Partner

(57) **Abstract**

A route guidance apparatus with voice recognition includes a voice analysis unit (120) to extract voice information of a user and analyze a directive and a keyword from the extracted voice information. The route guidance apparatus searches (140) POI that is matched with the analyzed keyword and is defined by the analyzed directive.

## Description

### Field of the Invention

The present invention relates to a route guidance apparatus and method with voice recognition.

### Background of the Invention

A route guidance apparatus is a very useful device that determines a current position of a vehicle having the guidance device on the basis of coordinate information of the vehicle received from global positioning system (GPS) satellites, reads map data of the current position from a built-in map database, and displays the position of the vehicle on the map on a screen of the guidance device, thereby facilitating a driver to determine a position of a road driving at present or easily find a destination when driving a vehicle in an unknown area.

However, a conventional route guidance apparatus has a poor capability in performing speech recognition and thus POI (Point of Interest) is not accurately searched with voice recognition.

### Summary of the Invention

In view of the above, the present invention provides a route guidance apparatus and method with voice recognition, capable of accurately recognizing directives associated with route guidance and keywords associated with POI.

Further, the present invention provides a route guidance apparatus and method with voice recognition, which capable of more quickly presenting a recognized result.

The object of the present invention is not limited to the aforesaid, but other objects not described herein will be clearly understood by those skilled in the art from descriptions below.

In accordance with a first aspect of an exemplary embodiment, there is provided a route guidance apparatus with voice recognition, which includes: an input unit configured to receive an audio signal; a voice analysis unit configured to extract voice information from the audio signal and analyze directive and keyword from the extracted voice information; a POI (Point of Interest) search unit configured to generate a search result corresponding to the POI on the basis of the analyzed directive and keyword; and an output unit configured to output the search result.

Preferably, the route guidance apparatus further includes: a voice database that stores candidate directives sorted by category and candidate keywords sorted by category. Preferably, the candidate directives stored in the voice database includes: a first directive group including candidate directives that defines a distance within a certain range from a current position of the route guidance apparatus; a second directive group including candidate directives that defines a distance within a certain range along a route being guided currently; a third directive group including candidate directives that defines a region of an administrative district at which the route guidance apparatus is currently located; and a fourth directive group including candidate directives that define a name of an administrative district.

In accordance with a second aspect of an exemplary embodiment, there is provided a route guidance method with voice recognition, which includes: receiving an audio signal; extracting voice information from the audio signal; analyzing a directive and a keyword from the extracted voice information; generating a search result corresponding to POI on the basis of the analyzed directive and keyword; and providing the search result.

Preferably, the generating search result includes: comparing the analyzed directive with candidate directives included in a database; searching the POI, which is matched with the analyzed keyword and is defined by the analyzed directive; and generating the search result.

### Brief Description of the Drawings

The above and other objects and features of the present invention will become apparent from the following description of embodiments given in conjunction with the accompanying drawings, in which:
Fig. 1 illustrates a block diagram of a route guidance apparatus with voice recognition in accordance with an exemplary embodiment of the present invention;
Figs. 2A and 2B are a flow chart describing a route guidance method with voice recognition in accordance with an exemplary embodiment of the present invention; and
Figs. 3 to 7 are diagrams illustrating in detail the route guidance method with voice recognition in accordance with an exemplary embodiment of the present invention.

### Detailed Description of the Embodiments

Embodiments of the invention will become apparent from the following description of the embodiments with reference to the accompanying drawings, which is set forth hereinafter. The invention may, however, be embodied in many different forms and should not be construed as being limited to the embodiments set forth herein. Furthermore, when it is described that one comprises (or includes or has) some elements, it should be understood that it may comprise (or include or has) only those elements, or it may comprise (or include or have) other elements as well as those elements if there is no specific limitation.

Hereinafter, exemplary embodiments of the present invention will be described in detail with reference to the accompanying drawings.

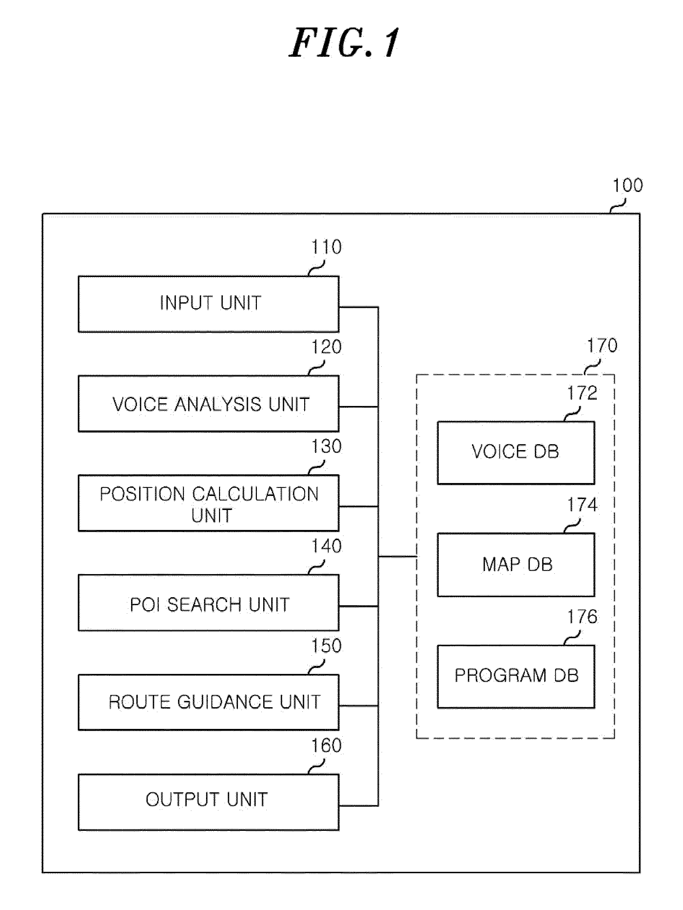

Fig. 1 illustrates a block diagram of a route guidance apparatus with voice recognition in accordance with an exemplary embodiment of the present invention.

Referring to Fig. 1, a route guidance apparatus 100 in accordance with an exemplary embodiment includes an input unit 110, a voice analysis unit 120, a position information calculation unit 130, a POI search unit 140, a route guidance unit 150, an output unit 160, and a storage unit 170.

The input unit 110 serves to receive voice from a user for the route guidance apparatus 100. The voice input unit 112, for example, may be a microphone, and receives an audio signal including a user's voice.

The voice analysis unit 120 recognizes an audio signal inputted from the voice input unit 112, extracts voice information from the audio signal, and analyzes a directive and a keyword from the extracted voice information.

In analyzing the directive and the keyword from the uttered voice, the voice analysis unit 120 may analyze or recognize the fore portion of uttered voice corresponding to the matched candidate directive as the directive and the uttered voice following the recognized directive as the keyword, or vice versa.

The position calculation unit 130 receives GPS signals sent from GPS satellites to calculate a current position of the route guidance apparatus 100 or the user.

The POI search unit 140 searches POI or address thereof on the basis of the analyzed directive and keyword, thereby presenting a search result.

More specifically, the POI search unit 140 compares the analyzed directive and keyword with candidate directives and keywords stored by category in the storage unit 170 to determine whether there is a candidate directive and a candidate keyword matched with the analyzed directive and keyword of the user. When there is the candidate directive and the candidate keyword matched with the analyzed directive and keyword, the POI search unit 140 generates a search result relating to POI or address thereof that corresponds to the analyzed keyword and is defined by the analyzed directive.

The route guidance unit 150 guides a route from a current position of the route guidance apparatus 100 to the POI by using the search result, the position, and the map data.

The output unit 160, for example, may include a video output unit that presents a video signal such as search result or route guidance screen, and an audio output unit that presents an audio signal such as voice guidance message.

The storage unit 170 includes a voice database 172 that stores candidate directives and keywords for voice recognition, a map database 174 that stores map data for route guidance, and a program database 176 that stores programs for executing the route guidance apparatus 100. The voice database 172 may include a directive database that stores candidate directives sorted by predetermined category, and a keyword database that stores candidate keywords sorted by predetermined category. The candidate directives may be classified into a first directive group including candidate directives that defines a distance within a certain range from a current position of the route guidance apparatus; a second directive group including directives that defines a distance within a certain range along a route being guided currently; a third directive group including candidate directives that defines a place of an administrative district at which the route guidance apparatus is currently located; and a fourth directive group including candidate directives that define a name of an administrative district.

Meanwhile, the keyword may include a name, title, address for POI that a user desires to find.

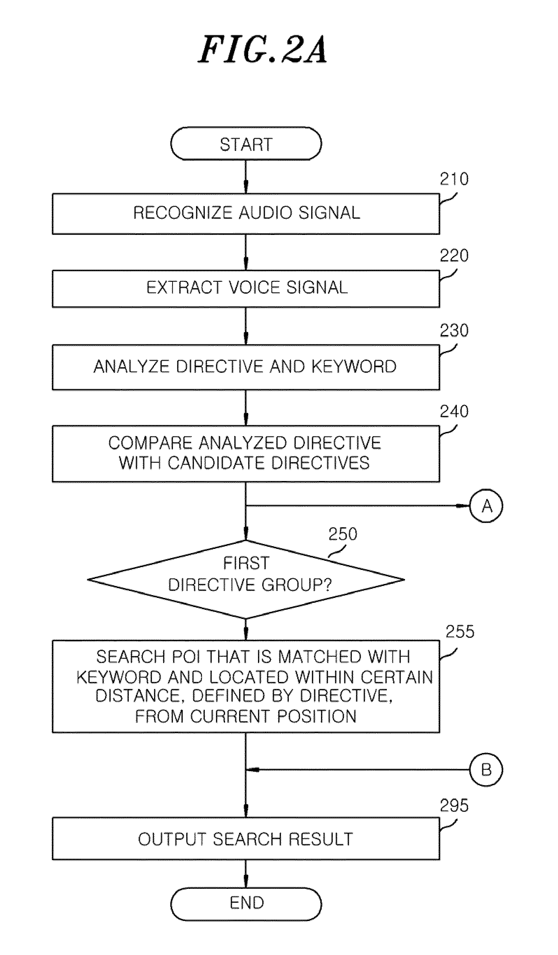

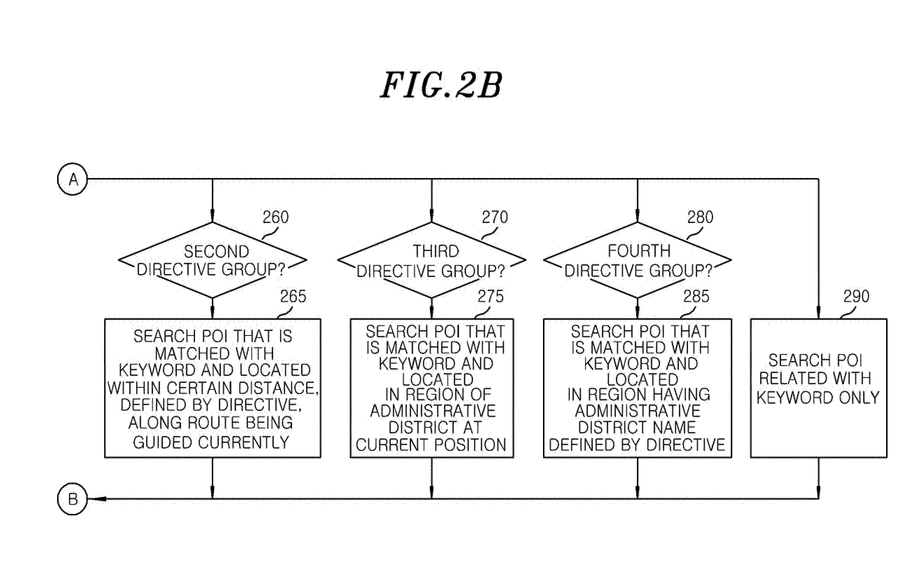

Figs. 2A and 2B are a flow chart describing a route guidance method with voice recognition in accordance with an exemplary embodiment of the present invention.

Referring to Figs. 2A and 2B, in operation 210, the route guidance apparatus 100 recognizes an audio signal produced from a user.

In operation 220, the route guidance apparatus 100 extracts voice from the recognized audio signal. In this case, the voice may be extracted by filtering a voice frequency.

In operation 230, the route guidance apparatus 100 analyzes or recognizes a directive and a keyword from the extracted voice information.

For example, the analyzed directive may be matched with any one of candidate directives included in the first directive group that defines a distance within a certain range from a current position of the route guidance apparatus; candidate directives included in a second directive group that defines a distance within a certain range along a route being guided currently; candidate directives included in a third directive group that defines a place of an administrative district at which the route guidance apparatus is currently located; or candidate directives included in a fourth directive group that define a name of an administrative district. Further, the analyzed keyword may be a name, title, address of a place for POI in a category sorted in a predetermined manner.

In operation 240, the route guidance apparatus 100 compares the analyzed directive with the candidate directives stored in the voice database 172.

As a comparison result, when it is determined that the analyzed directive is matched with any one of candidate directives included in the first directive group in operation 250, the method goes to operation 255. When it is determined that the analyzed directive is matched with any one of candidate directives included in the second directive group in operation 260, the method goes to operation 265; when it is determined that the analyzed directive is matched with any one of candidate directives included in the third directive group in operation 270, the method goes to operation 275; and when it is determined that the analyzed directive is matched with any one of candidate directives included in the fourth directive group in operation 280, the method goes to operation 285. In operation 255, the route guidance apparatus 100 searches the POI or address thereof, that is matched with the analyzed keyword and is located within a certain distance, defined by the analyzed directive, from the current position of the route guidance apparatus 100.

In operation 265, the route guidance apparatus 100 searches the POI or address thereof, that is matched with the analyzed keyword and located within a certain distance, defined by the analyzed directive, along the route being guided currently.

In operation 275, the route guidance apparatus 100 searches the POI or address thereof, that is matched with the analyzed keyword and located in a region of an administrative district at which the user is currently located.

In operation 285, the route guidance apparatus 100 searches the POI or address thereof, that is matched with the analyzed keyword and located in a region having the name of the administrative district, defined by the analyzed directive.

Meanwhile, when the analyzed directive is not matched with any of candidate directives stored in the voice database 172, the method advances to operation 290 in which the route guidance apparatus 100 regards the analyzed keyword as the directive and searches POI or address thereof that is matched with the analyzed keyword.

Thereafter, in operation 295, the route guidance apparatus 100 outputs a search result searched from the operations 255, 265, 275, 285, or 290.

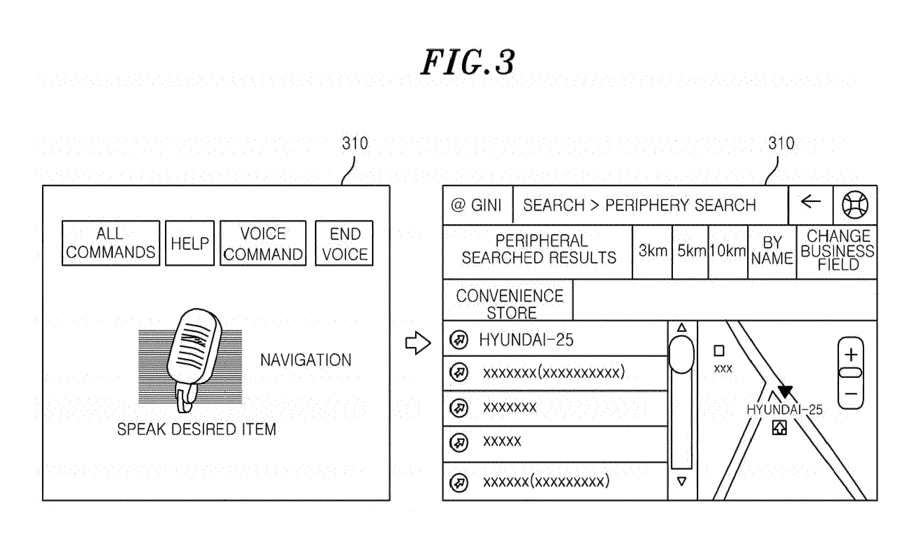

Figs. 3 to 7 are diagrams for describing in more detail operations performed by the route guidance apparatus with voice recognition in accordance with an exemplary embodiment of the present invention.

Fig. 3 illustrates a situation to find POI within a certain range from a current position of the route guidance apparatus.

The route guidance apparatus 100 displays a guidance screen 310 for voice input, and receives voice from a user. In this case, for example, the user may utter "PERIPHERY, HYUNDAI 25" or "HYUNDAI 25, PERIPHERY", which may be a request to find a convenience store, "HYUNDAI 25", located in the periphery of a current position of the route guidance apparatus or a user.

The route guidance apparatus 100 analyzes a directive of "PERIPHERY" and a keyword of "HYUNDAI 25" from the voice. The route guidance apparatus 100 then searches the POI, which is matched with the keyword of "HYUNDAI 25" and located in the periphery of a current position of the route guidance apparatus 100.

Thereafter, the route guidance apparatus 100 outputs a search result as shown in a route guidance screen 320 where a triangle with black denotes the current position of the route guidance apparatus 100 and an arrow indicates the POI.

In order to extend the recognition of the directive, the first directive group may further include, for example, such candidate directives as "PERIPHERAL", "NEAR", "CLOSE" and the like similar to the analyzed directive "PERIPHERY", and the route guidance apparatus 100 may support the recognition of the similar candidate directives.

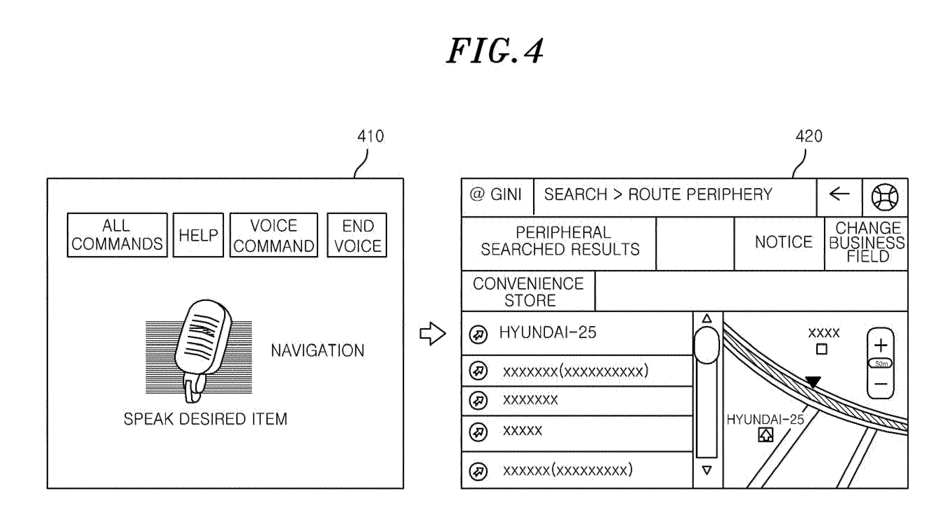

Fig. 4 illustrates a situation to find POI within a certain range along a route being guided currently.

The route guidance apparatus 100 displays a guidance screen 410 for voice input, and receives voice from a user. In this case, for example, the user may utter "HYUNDAI 25, ROUTE PERIPHERY" or "ROUTE PERIPHERY, HYUNDAI 25", which may be a request to find a convenience store, "HYUNDAI 25", located at the periphery along the route being guided currently.

The route guidance apparatus 100 analyzes a directive of "ROUTE PERIPHERY" and a keyword of "HYUNDAI 25" from the voice. The route guidance apparatus 100 then searches the POI, which is matched with the keyword of "ROUTE HYUNDAI 25" and located within a certain distance along the route being guided currently.

Thereafter, the route guidance apparatus 100 outputs a search result as shown in a route guidance screen 420 where a triangle with black denotes the current position of the route guidance apparatus 100, a hatched portion denotes a route being guided and an arrow indicates the POI.

In order to extend the recognition of the directive, the second directive group may further include, for example, similar candidate directives such as "NEAR ROUTE", "CLOSE TO ROUTE", "AROUND ROUTE" and so on in association with the route being guided, and the route guidance apparatus 100 may support the recognition of the similar candidate directives.

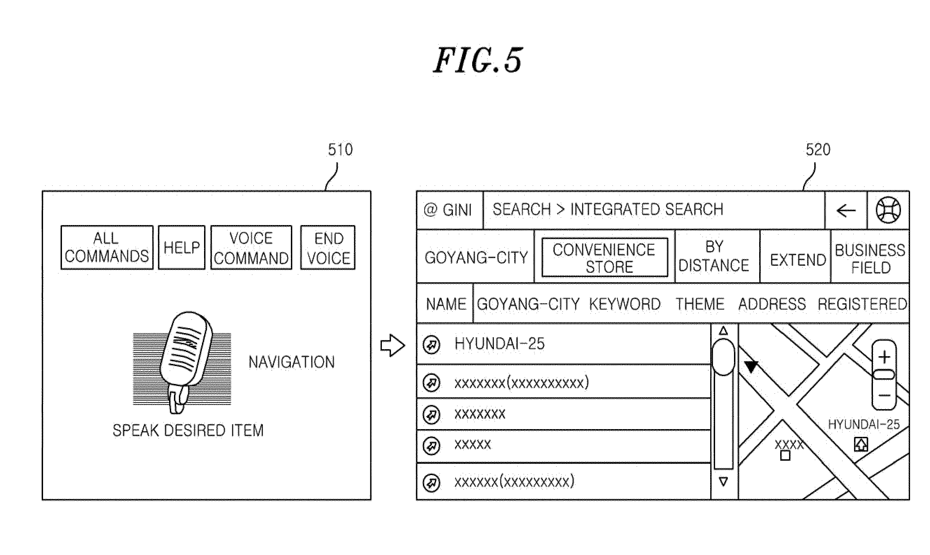

Fig. 5 illustrates a situation to find POI located in a region of an administrative district at which the user is currently located.

The route guidance apparatus 100 displays a guidance screen 510 for voice input, and receives voice from a user. In this case, for example, the user may utter "HERE, HYUNDAI 25" or "HYUNDAI 25, HERE", which may be a request to find a convenience store, "HYUNDAI 25", located in a region of an administrative district at which the user is currently located.

The route guidance apparatus 100 analyzes a directive of "HERE" and a keyword of "HYUNDAI 25" from the voice. The route guidance apparatus 100 then searches the POI, which is matched with the keyword of "HYUNDAI 25" and located within a region of an administrative district at which the user is currently located.

Thereafter, the route guidance apparatus 100 outputs a search result as shown in a route guidance screen 520 where a triangle with black denotes the current position of the route guidance apparatus 100 and an arrow indicates the POI.

In order to extend the recognition of the directive, the third directive group may further include, for example, similar candidate directives such as "THIS PLACE", "THIS POINT" and the like in association with the place at which the user is currently located, and the route guidance apparatus 100 may support the recognition of the similar directives.

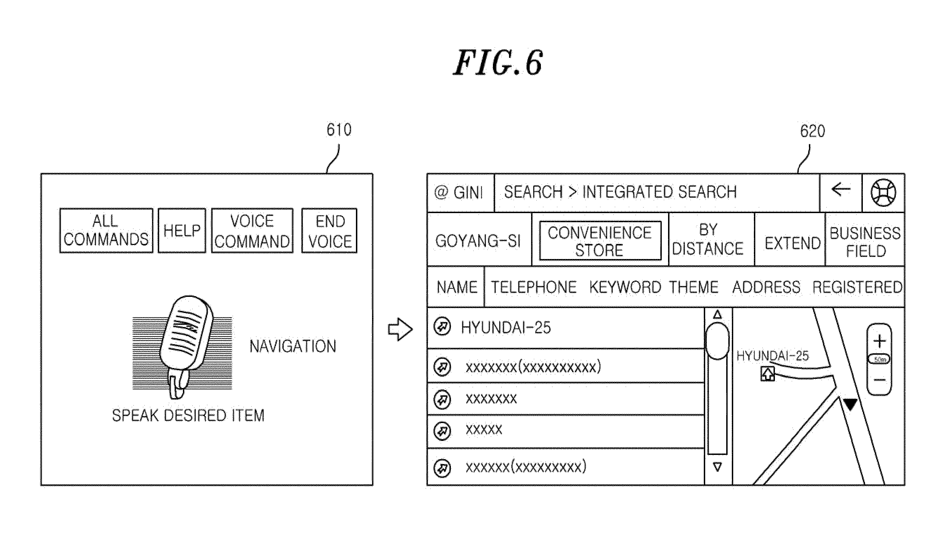

Fig. 6 illustrates a situation to find POI located within a region in an administrative district irrespective of a place at which the user is currently located.

The route guidance apparatus 100 displays a guidance screen for voice input, and receives voice from a user. In this case, for example, the user may utter "GOYANG-CITY, HYUNDAI 25" or "HYUNDAI 25, GOYANG-CITY, which may be a request to find a convenience store, "HYUNDAI 25", located in a region of an administrative district, GOYANG-CITY, irrespective of a place at which the user is currently located.

The route guidance apparatus 100 analyzes a directive of "GOYANG-CITY" and keyword of "HYUNDAI 25" from the voice.

The route guidance apparatus 100 then searches the POI that is matched with the keyword of "HYUNDAI 25" and located within a region of an administrative district corresponding to the directive of "GOYANG-CITY".

Thereafter, the route guidance apparatus 100 outputs a search result as shown in a route guidance screen 520 in which a triangle with black denotes the current of the route guidance apparatus 100 and an arrow indicates the POI.

In order to extend the recognition of the directive, the fourth directive group may further include names for a plurality of administrative districts. The route guidance apparatus 100 may support the recognition of the administrative district's names.

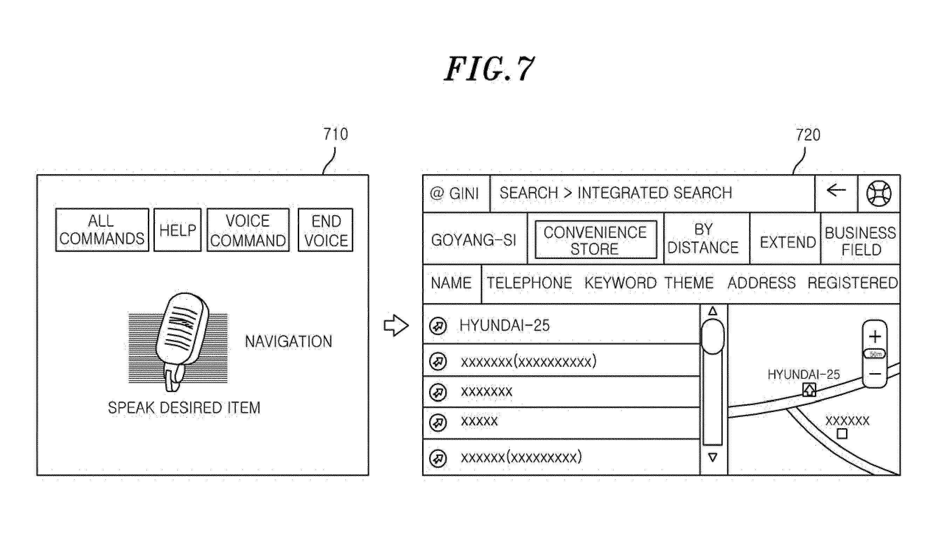

Fig. 7 illustrates a situation where a directive is not analyzed from voice information of a user.

The route guidance apparatus 100 displays a guide screen 710 for voice input, and receives voice from a user.

When it is determined that none directive is analyzed from the voice information, the route guidance apparatus 100 then may output a search result as shown in a route guidance screen 720 related to a keyword, e.g., "HYUNDAI 25" only.

Moreover, it can be easily understood by those skilled in the art that the above-described route guidance method with voice recognition may be stored in a computer-readable record medium (for example, a hard disk, a CD-ROM, etc.) and provided by implementing a program of directives for executing the method.

As described above, the route guidance apparatus and method with voice recognition in accordance with the present invention can accurately recognize and analyzes directive associated with route guidance and keyword associated with POI. Moreover, the present invention recognizes directive from voice and can more quickly output a searched result.

While the invention has been shown and described with respect to the embodiments, the present invention is not limited thereto. It will be understood by those skilled in the art that various changes and modifications may be made without departing from the scope of the invention as defined in the following claims.

## Claims

1. A route guidance apparatus with voice recognition, comprising;
an input unit configured to receive an audio signal;
a voice analysis unit configured to extract voice information from the audio signal and analyze directive and keyword from the extracted voice information;
a POI (Point of Interest) search unit configured to search POI on the basis of the analyzed directive and keyword; and
an output unit configured to output a search result.

2. The route guidance apparatus of claim 1, wherein the POI search unit compares the analyzed directive with candidate directives included in a database, and search the POI, which is matched with the analyzed keyword and is defined by the analyzed directive.

3. The route guidance apparatus of claim 1, further comprising:
a voice database that stores candidate directives sorted by category and candidate keywords sorted by category.

4. The route guidance apparatus of claim 2, wherein the candidate directives stored in the voice database comprises:
a first directive group including candidate directives that defines a distance within a certain range from a current position of the route guidance apparatus;
a second directive group including candidate directives that defines a distance within a certain range along a route being guided currently;
a third directive group including candidate directives that defines a region of an administrative district at which the route guidance apparatus is currently located; and
a fourth directive group including candidate directives that define a name of an administrative district.

5. A route guidance method with voice recognition, comprising;
receiving an audio signal;
extracting voice information from the audio signal; analyzing a directive and a keyword from the extracted voice information;
searching POI on the basis of the analyzed directive and keyword; and
providing a search result.

6. The route guidance method of claim 5, wherein said searching POI comprises:
comparing the analyzed directive with candidate directives included in a database; and
searching the POI, which is matched with the analyzed keyword and is defined by the analyzed directive.

7. The route guidance method of claim 6, wherein the directives stored in the voice database comprises:
a first directive group including candidate directives that defines a distance within a certain range from a current position of the route guidance apparatus;
a second directive group including candidate directives that defines a distance within a certain range along a route being guided currently;
a third directive group including candidate directives that defines a region of an administrative district at which the route guidance apparatus is currently located; and
a fourth directive group including candidate directives that define a name of an administrative district.
